# EUROPÄISCHE PATENTSCHRIFT

(11) **EP 2 227 368 B1**
(45) Veröffentlichungstag und Bekanntmachung des Hinweises auf die Patenterteilung: **07.09.2011**
(21) Anmeldenummer: 08865190.6
(22) Anmeldetag: 18.12.2008
(51) Int. Cl.: B29C 45/76

(54) **VERFAHREN ZUR INTERAKTIVEN STEUERUNG EINER MASCHINE**
METHOD FOR THE INTERACTIVE CONTROL OF A MACHINE
PROCÉDÉ DE COMMANDE INTERACTIVE D'UNE MACHINE

(30) Priorität: 20.12.2007 DE 102007062692
(43) Veröffentlichungstag der Anmeldung: 15.09.2010
(73) Patentinhaber: Keinath, Renate, 72336 Balingen (DE)
(72) Erfinder: Keinath, Renate, 72336 Balingen (DE)
(74) Vertreter: Reinhardt, Harry
(86) Internationale Anmeldenummer: PCT/EP2008/010866
(87) Internationale Veröffentlichungsnummer: WO 2009/080296

(56) Entgegenhaltungen:
- EP-A- 0 573 912
- WO-A-2008/061910
- DE-A1- 10 246 925
- DE-A1-102005 023 919
- JP-A- 61 102 227

## Beschreibung

Die Erfindung betrifft ein Verfahren zur interaktiven Steuerung einer Maschine, insbesondere einer Kunststoff-Spritzgießmaschine nach dem Oberbegriff des Anspruches 1.

Ein derartiges Verfahren ist aus der EP 0 573 912 B1 bekannt. In einer Datenverarbeitungseinheit wird ein Basiswissen oder ein Datensatz über die Grundregeln des Betriebs einer Spritzgießmaschine eingespielt. Die Maschine erfasst zusätzlich die vorhandene Maschinenausstattung und -umgebung wie z.B. Peripheriegeräte und bietet dem Maschineneinsteller einen Ablaufeditor zur Erzeugung eines Maschinenablaufs an. Aufgrund der in der Datenverarbeitungseinheit vorhandenen Kenntnisse über Abläufe und Maschine wird bei der Eingabe dem Bediener stetst nur eine selektierte Auswahl an Eingabemöglichkeiten vorzugsweise visuell auf einer Bildschirmoberfläche zur Verfügung gestellt, die weitere, in den bereits bestehenden Ablauf auch seitens Maschine und Spritzgießwerkzeug kompatibel einfügbare Abschnitte des Ablaufs darstellen. Zur Übernahme in den zu programmierenden Ablauf wird jede Eingabe in die Steuerung auf ihre Plausibilität geprüft und hinzugefügt. Dadurch kann die Eingabe von Arbeitsabläufen vereinfacht und erleichtert werden. Ein vergleichbares Verfahren ist aus der DE 102 46 925 B4 bekannt.

Aus der DE 10 2005 023 919 A1 ist ein Verfahren zur Ablaufoptimierung eines Spritzzyklus einer Spritzgießmaschine bekannt, wobei Aktionen unmittelbar an Teilen der Spritzgießmaschine vorgenommen werden und die so erfolgte Änderung in der Position der Teile über ein Teach-Einheit zur Übernahme in den zu programmierenden Arbeitsablauf der Maschine geteacht wird.

Ausgehend von diesem Stand der Technik liegt der vorliegenden Erfindung die Aufgabe zugrunde, ein Verfahren zur interaktiven Steuerung einer Maschine dahingehend zu verbessern, dass auch mit geringeren Kenntnissen über die Steuerung die Erstellung eines Ablaufs erleichtert wird.

Diese Aufgabe wird durch ein Verfahren mit den Merkmalen des Anspruches 1 gelöst.

Ausgehend von der aus dem Stand der Technik bekannten logischen Prüfung im Hintergrund einer Auswahlvorgabe der möglichen Folgeschritte und dem an sich bekannten 'Teachen' wird ausgehend von einem an der Maschine vorhandenen Ausgangszustand eine Aktion vorzugsweise durch einen von der Maschinensteuerung losgelösten Eingriff des Bedieners ausgeführt, an deren Ende die Maschine sich in einem neuen Istzustand befindet. Dieser Istzustand bzw. die eingetretene Änderung zwischen dem Ausgangszustand und dem Istzustand wird über eine Teach-Einheit zur Übernahme in den zu programmierenden Arbeitsablauf der Maschine als neuer Bestandteil geteacht und hinzugefügt. Dies erfolgt in Verbindung mit der Maschinensteuerung so, dass nicht nur weitere Ausführungsmöglichkeiten für diesen Istzustand geprüft und zur Verfügung gestellt werden, sondern es erfolgt eine logische Prüfung einer Aktion bereits durch die Freigabe der Funktion bei Betätigung der manuellen Einleitung der Aktion wie z.B. einer anzufahrenden Position z.B. durch Fahrtasten. Damit wird, bevor die Aktion ausgeführt wird, die beabsichtigte Aktion überprüft, so dass sie gar nicht oder nur teilweise ausgeführt wird und der unlogischen Befehlsteil der Aktion schon gar nicht zugelassen wird, d.h. nur solange die logische Prüfung im Hintergrund dies zulässt. So wird z.B. nicht erlaubt, dass ein Handhabungssystem beim Teachen in eine geschlossene Form verfährt, die dadurch vorgegebene Bewegung wird jedoch z.B. teilweise bis an die Form zugelassen.

Dadurch wird es möglich, insbesondere externe, genauso gut aber auch interne Abläufe der Spritzgießmaschine, wie z.B. Spritzgießeinheit, Formschließeinheit oder Peripherie, wie z.B. Handhabungssysteme oder Montagevorrichtungen nicht nur durch Funktionsplatzierung über Symbole und Positionen über Koordinaten festzulegen, sondern die entsprechenden Positionen können manuell entsprechend der logischen Verträglichkeit angefahren werden und dann mit einer logischen Überprüfung im Hinblick auf die Möglichkeit dieser Stellung im Ablauf übernommen werden.

Vorzugsweise wird wenigstens ein Bauteil der Maschine oder ihrer peripheren Einrichtung an eine bestimmte Position manuell verbracht und, wenn dieses Maschinenbauteil an der gewünschten Position angelangt ist, dies gegenüber der Maschinensteuerung bestätigt oder quittiert. Die Maschine übernimmt aus dieser Stellung die Betriebsparameter für diese Position in den Ablauf und schlägt weitere Ausführungsmöglichkeiten ausgehend von dieser bestätigten Position vor. Die Überführung in den Istzustand kann auch durch funktionales Bewegen erfolgen, indem die Zielwerte über eine Eingabeeinheit eingegeben werden.

Dazu wird im Grundablauf der Maschine oder in einem bereits erstellten Teilablauf der Ablaufeingabe die Maschine bis zu einem Ausgangszustand, d.h. bis an die zu teachende Position gebracht. Dieser Ausgangszustand wird für die Maschinensteuerung als Startpunkt für das folgende Teachen markiert. Dann kann an der Maschine mit verschiedenen Achsen bzw. Aktoren manuell im Teach-Betrieb eine Aktion so ausgeführt werden, wie es die logische Ablaufprüfung der Maschine erlaubt. Die Steuerung merkt sich, wenn z.B. Wege eingegeben werden, die Reihenfolge und Positionen der manuell angefahrenen Achsen und Aktoren (auch Endlagenpositionen) und fügt diese bei Quittierung/Übernahmebefehl logisch und zutreffend geordnet in den Maschinenablauf bzw. Peripherieablauf ein und stellt dies auf einer Bedienoberfläche oder Anzeigeeinheit auch graphisch dar.

Vorzugsweise ist der Steuerung bzw. Maschine bereits ein programmierter Ablauf im Fall einer Kunststoff-Spritzgießmaschine für einen Zyklus bekannt. Ausgehend von diesem Zustand kann dann eine Eingriffsposition bestimmt werden, in der im "Teach In"-Verfahren durch manuelle Handbetätigung oder durch funktionales Bewegen über eine Handtastatur die gewünschte Aktion geteacht wird. Die Ausführungsmöglichkeiten werden von dieser Stellung aus vorzugsweise im Hinblick auf nachfolgende als auch vorausgehende Schritte des Ablaufs überprüft, sofern zunächst eine logische Plausibilitätsprüfung erfolgt ist, dass dieser Schritt an dieser Stelle möglich ist. Ebenso gut kann aber auch mit einem Teachen als erstem Schritt begonnen werden, um daran den gesamten Ablauf aufzubauen.

Weitere Vorteile ergeben sich aus den Unteransprüchen und der nachfolgenden Beschreibung.

Im Folgenden wird die Erfindung anhand eines Ausführungsbeispiels näher erläutert. Es zeigen:

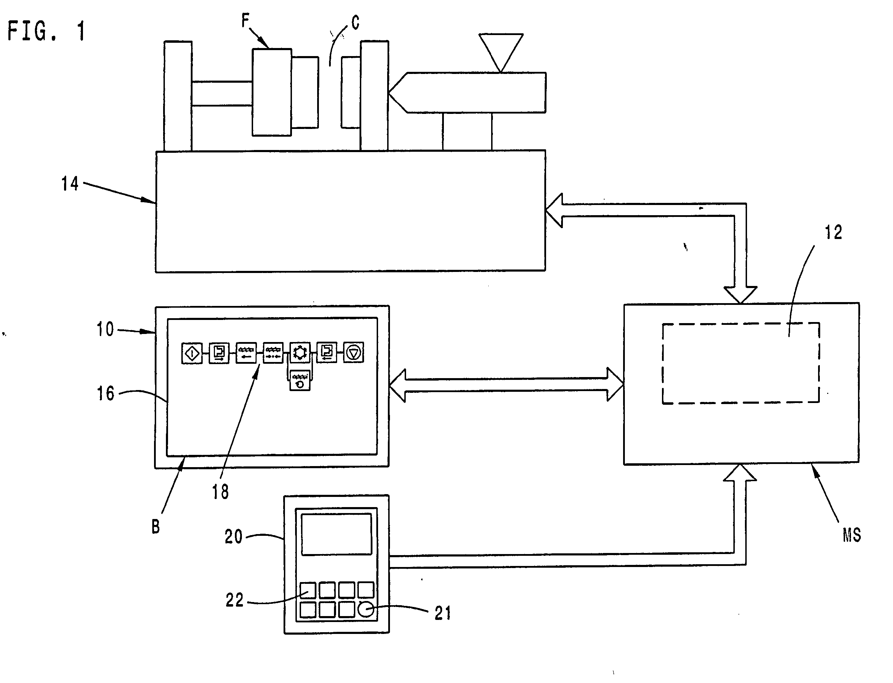

- Fig.1: ein Blockschaltbild einer mit einer erfindungsgemäßen Steuerung ausges- tatteten Spritzgießmaschine,
- Fig. 2, 3: eine Darstellung eines Handhabungssystems an einem vergrößert darge- stellten Ausschnitt einer Spritzgießmaschine im Bereich des Formhohl- raums beim Teachen einer Positionsänderung/Bewegung.

Ausführliche Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Der im Folgenden verwendete Begriff "Achse" beschreibt beliebig angetriebene Bewegungsachsen, wie sie an Maschinen 14 und insbesondere an Spritzgießmaschinen verwendet werden. Bewegungsachsen an Spritzgießmaschinen sind z.B. das Düse Fahren, das Einspritzen, die Werkzeugbewegung oder das Auswerfen.

Die Figuren zeigen schematisch eine Maschinensteuerung MS einer Maschine 14, die im Ausführungsbeispiel eine Spritzgießmaschine, vorzugsweise eine Kunststoff-Spritzgießmaschine zur Verarbeitung von Kunststoffen und anderen plastifizierbaren Massen wie keramischen oder metallischen Massen ist. Ein Einsatz an anderen Maschinen ist jedoch durchaus möglich. In der Maschinensteuerung MS ist eine Datenverarbeitungseinheit 12 vorgesehen, in der einerseits bereits ein Datensatz für die Grundregeln des Arbeitsablaufs der Maschine eingespielt ist und die üblicherweise auch über die Grundregeln der Technik verfügt, für die die Maschine 14 vorgesehen ist. Andererseits ist die Datenverarbeitungseinheit 12 sowohl mit einer Eingabeeinheit 10 als auch mit der Maschine 14, d.h. hier mit der Spritzgießmaschine verbunden, um Eingaben z.B. im Hinblick auf Betriebsparameter zuzulassen und mit der Maschinenausrüstung und/oder Maschinenumgebung wie peripheren Geräten wie z.B. Handhabungsgeräten oder Montagevorrichtungen abzustimmen.

Im Regelfall erlaubt die Eingabeeinheit 10 dem Bediener in einer den Bediener führenden Form die Eingabe der für den Arbeitsablauf der Maschine erforderlichen Betriebsparameter. Die eingegebenen Betriebsparameter werden in der Datenverarbeitungseinheit 12 gespeichert. Aus diesen Informationen und auch aus den Informationen über Maschinenausrüstung und -umgebung werden anschließend ein oder mehrere Arbeitsabläufe 18 gemäß den gespeicherten Betriebsparametern durchgeführt. Diese Arbeitsabläufe können auch Anfahr- und Abschlussprozesse einer Maschinenbetätigung umfassen oder auch die Abläufe des Maschinenumfelds. Es kann sich bei diesen Abläufen sowohl um kontinuierliche Prozesse, wie z.B. beim Extrudieren als auch diskontinuierliche Prozesse wie z.B. den Spritzzyklus einer Spritzgießmaschine oder z.B. Montagevorgänge der Peripherie handeln. Zu diesen Prozessen können z.B. kontinuierlich verfahrbare Maschinen- und Peripheriebewegungen/-Achsen ebenso gehören wie die Daten von "digitalen Aktoren" oder Sensoren wie z.B. Endschalter an Achsen, die entsprechend der Maschinenkonfiguration intelligent von der Maschine identifiziert werden.

Aufgrund des Datensatzes über die Grundregeln des Arbeitsablaufs der Maschine wie z.B. über den Spritzgießprozess und das Spritzgießen an sich wird als Ergebnis dem Bediener nach einer Plausibilitätsprüfung seiner letzten Eingabe eine selektierte Auswahl an aufgrund der Maschinenausrüstung und -umgebung bestehenden Möglichkeiten für weitere Schritte angeboten. Sobald also der Bediener einen Teilabschnitt eines Arbeitsablaufes 18 eingibt, werden ihm von da an nur noch die weiteren, in die bestehenden Abschnitte dieses Arbeitsablaufes kompatibel einfügbaren Abschnitte des Ablaufs zur Verfügung gestellt. Dieses Verfahren ist aus der gattungsbildenden EP 0 573 912 B1 bekannt,

Ergänzend oder alternativ zu dieser Eingabe über die Eingabeeinheit 10, also z.B. durch die Eingabe von Koordinaten, die von Maschinebauteilen des Systems angefahren werden, wird nun die Möglichkeit vorgesehen, durch ein "Teach In" eine Aktion auszuführen, wie z.B. ein oder mehrere Bauteile oder Einheiten der Maschine oder ihrer peripheren Einrichtung an eine bestimmte Position zu verbringen und die Position des Bauteils an dieser Stelle zu bestätigen. Die Teach-Einheit 20 besitzt Tasten 22, die z.B. zum Verfahren von Bauteilen oder Einheiten genutzt werden können, sowie eine Bestätigungstaste 21. Sie wird im Wesentlichen zur Ausführung der Aktionen bzw. zu deren Bestätigung verwendet.

Zunächst wird die Maschine zu einem Ausgangszustand gebracht, der für die Maschinensteuerung als Ausgangszustand für das nachfolgende Teachen markiert wird. Dann wird wenigstens ein Bauteil, wenigstens eine Einheit oder wenigstens eine Peripherie-Einrichtung durch eine Aktion zu einer neuen Position überführt, zu ihrem neuen Istzustand, und diese Position über die Bestätigungstaste bestätigt. Mit der Eingabe über die Bestätigungstaste 21 quittiert die Maschinensteuerung MS die ausgeführte Aktion, ausgehend von dem Ausgangszustand zu dem durch die Aktion erreichten Istzustand. Sie übernimmt die Betriebsparameter wie z.B. die Position, den Druck oder die Kraft, die sich durch das Verbringen des Bauteils oder der Einheit an diese Stelle ergeben haben, in die Steuerung bzw. erkennt diese. Durch dieses Quittieren wird die zuvor ausgeübte Aktion, wie z.B. eine Achsbewegung oder eine Positionierung bzw. die eingetretene Änderung abgespeichert. Diese Aktion erfolgt weitestgehend losgelöst von der Maschinensteuerung, indem der Bediener entweder manuell Änderungen vornimmt oder eine Aktion als funktionales Bewegen über Eingabemittel vorgibt, die von der Steuerung ausgeführt wird.

Funktionen wie Bewegungen oder positionsbestimmende Ausführungen werden dadurch programmiert, dass teachende, also manuell einwirkende Aktionen ausgeführt werden, die nach dieser Ausführung durch Quittieren derselbigen an der entsprechenden Zyklusposition programmiert wird. Die Positions- oder Funktionsfestlegung geschieht entweder durch Einleiten derselbigen über Handtasten an der Maschine und somit die Ausführung der Aktion unterstützt durch die Maschinenfunktion, oder - wie zum Beispiel bei Handhabungssystemen - durch tatsächliches, manuelles Bewegen von Punkt A zu Punkt B mittels Muskelkraft.

Jetzt erfolgt eine Hintergrundprüfung darauf, ob eine derartige Eingabe möglich ist und die durch das Verbringen des Bauteils oder der Einheit erfolgte Aktion wird in den zu programmierenden Arbeitsablauf als neuer Bestandteil hinzugefügt, so dass dieser vorzugsweise manuelle Vorgang als fester Bestandteil in der Zyklusausführung übernommen wird. Diese Ablaufprüfung erfolgt zum Teil schon, bevor die Aktion überhaupt ausgeführt wird, um z.B. eine gewünschte Bewegung überhaupt 'erlauben' zu können. So darf z.B. ein Handhabungssystem oder Roboterarm nicht in die Spritzgießform einfahren, wenn diese noch geschlossen ist. In diesem Fall wird die mögliche Position übernommen und ein Symbol mit entsprechender "Rest"-Parametrie-rung in den Datensatz z.B. als vorbesetzte Geschwindigkeitsparameter eingefügt. Dies geschieht z.B. über Endschalter an den Achsen. Grundsätzlich ist eine Aktion nur erlaubt, wenn diese Aktion durch die logische Prüfung der an der gewünschten Stelle einzufügenden Funktion oder Aktion erlaubt ist. Von hier ausgehend werden dann die entsprechenden Anschlussbedingungen als weitere Eingabe-oder Verfahrmöglichkeiten zur Ausführung weitere Schritte dem Bediener zur Verfügung gestellt, um den Arbeitsablauf zu vervollständigen.

Dieser Vorgang kann beliebig oft wiederholt werden, was das Programmieren von komplexen Vorgängen auch bei geringer Kenntnis der Steuerung möglich macht. Es ist also an dieser Stelle eine direkte Programmierkenntnis für die einzelnen Bewegungen nicht mehr notwendig.

Die Ausführungsmöglichkeiten werden ausgehend von der bestätigten Stellung des Arbeitsablaufs 18 im Hinblick sowohl auf nachfolgende als auch auf vorausgehende Schritte oder Abschnitte des Arbeitsablaufs zur Verfügung gestellt. Grundsätzlich kann so entweder zunächst ein Ablauf grob erstellt, eine Eingriffsposition als Ausgangszustand definiert und von dort ein Bauteil oder eine Einheit in einen Istzustand der Maschine verbracht werden, so dass weitere Ausführungsmöglichkeiten von der Maschinensteuerung MS vorgeschlagen werden und die durchgeführte Aktion in den Arbeitsablauf eingebunden wird. Alternativ kann durch das Programmieren von Aktionen verschiedener Bauteile oder Einheiten der Spritzgießmaschine oder ihrer Peripherie in einer logischen Sequenz ein Arbeitsablauf 18 bzw. Zyklus auch allein auf diese Art und Weise erzeugt werden. Die letzte Möglichkeit hat den Vorteil, dass allein aus rein physikalischen Gründen (wo ein Körper ist, kann der andere nicht sein) keine nicht zu verwirklichenden Aktionen vorgenommen werden können. Es können auch durch ein mehrfaches Verbringen eines Bauteils und/oder das Verbringen mehrerer Bauteile an verschiedene Stellen Maschinenabläufe erzeugt werden. Dabei kann auch der erreichte Istzustand eines Teach-Vorgangs als Ausgangszustand für ein weiteres Teachen markiert werden.

Als Bauteil der Maschinenausrüstung oder Maschinenumgebung kommen grundsätzlich sämtliche Bauteile oder Einheiten in Frage, die von der Maschinensteuerung MS angesteuert werden können. Dies erstreckt sich sowohl auf Peripheriegeräte wie Handhabungsgeräte aber genauso auch auf Bauteile, Einheiten oder Achsen der Spritzgießmaschine selbst, bis hin zu den verschiedenen Grundablaufsfunktionen wie z.B. Spritzgießform öffnen, Spritzgießform schließen und Werkzeugachsen wie z.B. Kernzüge.

Es ist auch denkbar, als Aktion die Einstellungen der Maschine 14 oder ihrer Peripherie 'manuell' zu verdrehen, also z.B. Druck, Ausstoßerkraft, Temperatur zu verändern oder Positionen vorzugeben, und diese dann in den Maschinenablauf als Überwachungsposition zu übernehmen. Üblicherweise ist der bevorzugte Betriebsparameter der Weg und die damit über die Zeit in Verbindung stehende Geschwindigkeit und Beschleunigung. Die Rückmeldung an die Maschine erfolgt über die Zustandsänderungen/Differenz an Aktoren und/oder über Sensoren. Ein Aktor ist dabei als ein Element definiert, dass einen Befehl in eine mechanische Bewegung umsetzt.

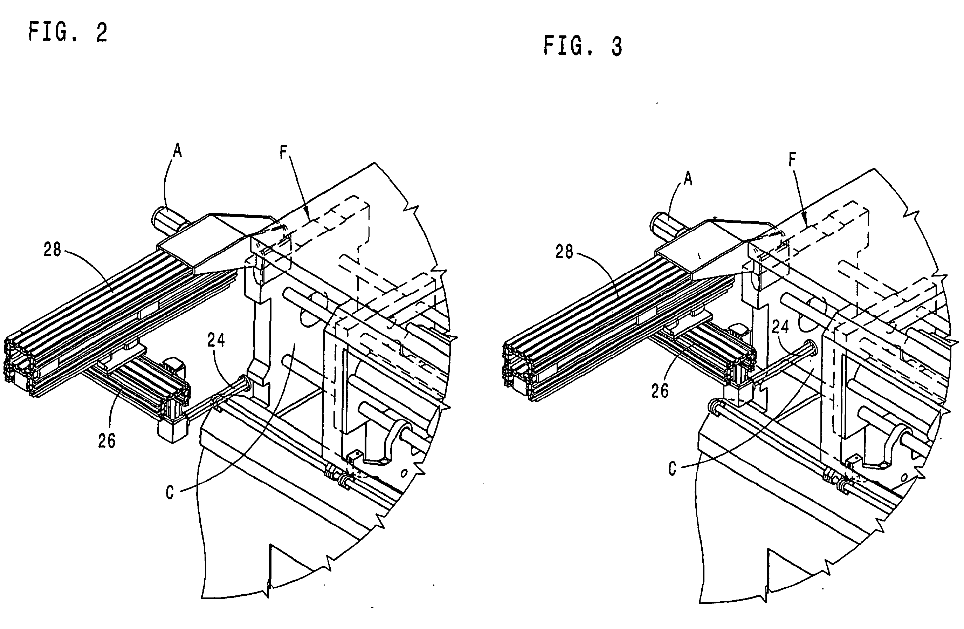

Dies ist z.B. in den Fig. 2 und 3 dargestellt. Gegenüber Fig. 2 wurde der untere Schlitten 26 mit dem Greifer 24 in Fig. 3 in Richtung auf den Formaufspannraum C der Formschließeinheit F verschoben. Dies führt zu einer Zustandsänderung, die über Wegmesser oder die Stellung der Antriebseinheit A erfasst werden kann.

Die Bestätigung kann über die an der Maschine 14 vorgesehene Eingabeeinheit 10 am Bildschirm B oder über eine gesonderte Einheit wie die Teach-Einheit 20 oder über auf dem Bildschirm B abgebildete Tasten erfolgen.

Die gesamte Steuerung kann auch auf einem Computer lesbaren Medium wie einem Datenträger mit per Computer ausführbaren Anweisungen gespeichert sein, der mit einem Programm zur Durchführung dieses Verfahrens bespielt ist.

### Bezugszeichenliste

- 10: Eingabeeinheit
- 12: Datenverarbeitungseinheit
- 14: Maschine
- 16: Oberfläche
- 18: Arbeitsablauf
- 20: Teach-Einheit
- 21: Bestätigungstaste
- 22: Tasten
- 24: Greifer
- 26: unterer Schlitten
- 28: oberer Schlitten
- A: Antriebseinheit
- B: Bildschirm
- C: Formaufspannraum
- F: Formschließeinheit
- MS: Maschinensteuerung

## Patentansprüche

1. Verfahren zur interaktiven Steuerung einer Maschine (14), insbesondere einer Kunststoff-Spritzgießmaschine, bei dem in einer einen Bediener führenden Form für den Arbeitsablauf einer Maschine erforderliche Betriebsparameter in eine diese Betriebsparameter speichernde Datenverarbeitungseinheit (12) eingegeben werden und anschließend ein oder mehrere Arbeitsabläufe gemäß den gespeicherten Betriebsparametern durchgeführt werden, wobei in der Datenverarbeitungseinheit (12) ein Datensatz über die Grundregeln des Arbeitsablaufs der Maschine vorhanden ist und unter Einsatz des Datensatzes als Ergebnis dem Bediener eine selektierte Auswahl an auf Grund der Maschinenausrüstung und -umgebung bestehenden Möglichkeiten von weiteren, in die bestehenden Abschnitte des Arbeitsablaufs kompatibel einfügbaren Abschnitten des Arbeitsablaufs auf einer Oberfläche (16) visualisiert zur Verfügung gestellt wird, wobei der einfügbare Abschnitt zur Übernahme in den zu programmierenden Arbeitsablauf der Maschine als neuer Bestandteil auf seine Durchführbarkeit logisch geprüft und hinzugefügt wird,
**gekennzeichnet durch** die Schrittfolge:
- manuelles Einleiten einer Aktion ausgehend von einem an der Maschine vorhandenen Ausgangszustand, an deren Ende die Maschine sich in einem Istzustand befindet,
- Freigeben der Aktion zur logischen Prüfung der Aktion auf ihre Durchführbarkeit,
- Ausführen der Aktion, so weit sie durchführbar ist, und
- Teachen des **durch** die logische Prüfung erreichbaren Istzustands bzw. der durch die logische Prüfung erreichbaren eingetretenen Änderung zwischen dem Ausgangszustand und dem Istzustand über eine Teach-Einheit (20) zur Übernahme in den zu programmierenden Arbeitsablauf der Maschine als neuer Bestandteil
- logisches Überprüfen des erreichbaren Istzustands im Hinblick auf die Möglichkeit der Stellung als Istzustand im Arbeitsablauf,
- Übernehmen der Betriebsparameter aus dieser Stellung für diese Position in den Arbeitsablauf.

2. Verfahren nach Anspruch 1, **dadurch gekennzeichnet, dass** die Aktion und die damit verbundene Eingabe der Betriebsparameter durch Verbringen wenigstens eines Bauteils oder wenigstens einer Einheit der Maschine oder ihrer wenigstens einen peripheren Einrichtung von einem vorzugsweise für die Maschinensteuerung markierten Ausgangszustand an eine dem Istzustand entsprechende Position und Bestätigen der Position über die Teach-Einheit (20) zur Übernahme im zu programmierenden Arbeitsablauf der Maschine erfolgt.

3. Verfahren nach Anspruch 1 oder 2, **dadurch gekennzeichnet, dass** die Aktion durch manuelles Betätigen oder durch funktionales Bewegen über eine Eingabeeinheit (10) oder über die Teach-Einheit (20) vorzugsweise durch einen von der Maschinensteuerung (MS) losgelösten Eingriff des Bedieners erfolgt.

4. Verfahren nach einem der vorhergehenden Ansprüche, **dadurch gekennzeichnet, dass** die Möglichkeiten als Ausführungsmöglichkeiten ausgehend von der bestätigten Position in Hinblick auf nachfolgende und/oder vorausgehende Schritte des Arbeitsablaufs zur Verfügung gestellt werden.

5. Verfahren nach Anspruch 4, **dadurch gekennzeichnet, dass** die Ausführungsmöglichkeiten von diesem Istzustand ausgehend geprüft und zur Verfügung gestellt werden.

6. Verfahren nach einem der vorhergehenden Ansprüche, **dadurch gekennzeichnet, dass** die Betriebsparameter Weg und/oder Zeit sind.

7. Verfahren nach einem der vorhergehenden Ansprüche, **dadurch gekennzeichnet, dass** die Betriebsparameter aufgrund der Änderung an Achsen der Maschine (14) und/oder Aktoren erfasst werden.

8. Verfahren nach einem der vorhergehenden Ansprüche, **dadurch gekennzeichnet, dass** die Übernahme in den zu programmierenden Arbeitsablauf nach Überprüfung des Arbeitsablaufs mittels des Datensatzes über die Grundregeln der Maschine (14) und des Verfahrensprozesses und auf Grund der Maschinenausrüstung und -umgebung unter Berücksichtigung bereits bestehender Teilabläufe erfolgt.

9. Verfahren nach einem der vorhergehenden Ansprüche 3 bis 8, **dadurch gekennzeichnet, dass** im Fall eines Teachens der Aktion durch funktionales Bewegen und Eingabe über die Eingabeeinheit (10) oder über die Teach-Einheit (20) die logische Prüfung der Aktion auf ihre Durchführbarkeit erfolgt, wobei ein unlogischer Anteil der Aktion nicht zugelassen wird.

10. Verfahren nach Anspruch 9, **dadurch gekennzeichnet, dass**, falls die logische Prüfung ergibt, dass die Aktion nur teilweise ausführbar ist, ein teilweises Teachen erfolgt und der verbleibende Rest der Aktion zwischengespeichert und/oder nach Kontakt mit dem Benutzer verworfen wird.

11. Verfahren nach einem der vorhergehenden Ansprüche, **dadurch gekennzeichnet, dass** die Aktion durch ein mehrfaches Verbringen des Bauteils oder der Einheit und/oder das Verbringen mehrere Bauteile oder Einheiten an verschiedene Positionen erfolgt.

12. Verfahren nach einem der vorhergehenden Ansprüche, **dadurch gekennzeichnet, dass** der Ablauf zumindest ein Teilablauf einer Maschinengrundablaufsfunktion ist.

13. Verfahren nach einem der vorhergehenden Ansprüche, **dadurch gekennzeichnet, dass** das Verfahren an einer zyklisch arbeitenden Kunststoff-Spritzgießmaschine durchgeführt wird und die Abschnitte Zyklusabschnitte sind.

14. Computer lesbares Medium wie ein Datenträger mit per Computer ausführbaren Anweisungen zur Durchführung des Verfahrens zur interaktiven Steuerung einer Maschine nach einem der Ansprüche 1 bis 13.

## Claims

1. A method for the interactive control of a machine (14), in particular a plastics injection moulding machine, wherein the operating parameters required for the sequence of operations of a machine are entered into a data processing unit (12) storing these operating parameters in a form providing guidance to an operator, and subsequently one or more operational sequences are carried out in accordance with the stored operating parameters, wherein the data processing unit (12) has a set of data containing the basic rules for the sequence of operations of the machine and wherein, as a result of employing the set of data and on the basis of the possibilities presented by the equipment of the machine and the environment thereof, a selected collection of possibilities for further sections of the sequence of operations which are insertible in compatible manner into existing sections of the sequence of operations is made available to the operator in visualized form on a panel (16), wherein the insertible section is checked for the purposes of adoption thereof in the sequence of operations of the machine to be programmed and added thereto as a new component,
**characterized by** the sequence of steps:
- manually initiating of an action starting from an starting state existing in the machine, whereby at the end thereof the machine is in an actual state,
- releasing the action for a logical checking as to its feasibility,
- carrying out the action as far as feasible,
- teaching the actual state or the change that has occurred between the starting state and the actual state, respectively, by a teaching unit (20) as achievable by the logical check for the purposes of adopting it into the sequence of operations of the machine, which sequence of operations is to be programmed, as a new component,
- logically checking of the achievable actual state as regards the possibility of the state as an actual state in the sequence of operations,
- adopting the operating parameters at this state for this position into the sequence of operation.

2. A method in accordance with Claim 1, **characterized in that** the action and the entry of the operating parameters associated therewith is effected by moving at least one component or at least one unit of the machine or at least one peripheral device thereof from a starting state that is preferably flagged for the machine control system into a position corresponding to the actual state and by confirming this position for the purposes of adopting it in the sequence of operations of the machine that is to be programmed by means of the teaching unit (20).

3. A method in accordance with Claim 1 or 2, **characterized in that** the action is effected by a manual operation or by a functional movement by means of an input unit (10) or by means of the teaching unit (20) preferably by an intervention of an operator that is independent of the machine control system (MS).

4. A method in accordance with any of the preceding Claims, **characterized in that** the possibilities are made available in the form of possible manners of implementation commencing from the confirmed position in the light of following and/or preceding steps of the sequence of operations.

5. A method in accordance with Claim 4, **characterized in that** the possible manners of implementation are checked and made available commencing from this actual state.

6. A method in accordance with any of the preceding Claims, **characterized in that** the operating parameters are path and/or time.

7. A method in accordance with any of the preceding Claims, **characterized in that** the operating parameters are detected on the basis of the change in the axes of the machine (14) and/or actuators.

8. A method in accordance with any of the preceding Claims, **characterized in that** the process of adoption into the sequence of operations that is to be programmed is effected after checking of the sequence of operations by means of the set of data containing the basic rules of the machine (14) and of the procedural process and on the basis of the equipment of the machine and the environment thereof whilst taking into consideration currently existing partial sequences.

9. A method in accordance with any of the preceding Claims 3 to 8, **characterized in that**, in the case of a process of teaching the action by functional movement and input by means of the input unit (10) or by means of the teaching unit (20), the logical test as to the feasibility of the action is effected before the action is implemented whereby an illogical portion of the action is not permitted.

10. A method in accordance with Claim 9, **characterized in that**, in the event that the result of the logical test is that the action is only partially executable, a partial teaching process is effected and a remaining rest part of the action is buffered and/or rejected after contact with the user.

11. A method in accordance with any of the preceding Claims, **characterized in that** the action is effected by multiple transfers of the component or the unit and/or the transfer of a plurality of components or units into different positions.

12. A method in accordance with any of the preceding Claims, **characterized in that** the operational sequence is at least a partial sequence of a basic sequence function of the machine.

13. A method in accordance with any of the preceding Claims, **characterized in that** the method is carried out in a cyclically working plastics injection moulding machine and the sections are sections of the cycle.

14. A computer readable medium such as a data carrier containing computer executable instructions for the carrying out of the method for the interactive controlling of a machine in accordance with any of the Claims 1 to 13.

## Revendications

1. Procédé de commande interactive d'une machine (14), en particulier d'une machine à injection de matière plastique, dans lequel les paramètres de fonctionnement nécessaires pour le déroulement du fonctionnement d'une machine sont saisis sous une forme guidant un utilisateur dans une unité de traitement de données (12) stockant ces paramètres de fonctionnement puis une ou plusieurs opérations sont effectuées suivant les paramètres de fonctionnement stockés, un ensemble de données sur les règles de base du déroulement du fonctionnement de la machine étant présent dans l'unité de traitement de données (12) et en mettant en oeuvre l'ensemble de données, en tant que résultat, un choix de possibilités existantes, basées sur l'équipement de machine et son environnement, d'autres sections de déroulement de travail insérables de façon compatible dans les sections existantes du déroulement de travail, étant mises à la disposition de l'utilisateur de façon visuelle sur une surface (16), la section insérable étant examinée logiquement quant à sa possibilité d'exécution, pour sa prise en compte dans le déroulement du fonctionnement à programmer de la machine, en tant que nouvelle composante, et ajoutée,
**caractérisé par** la séquence d'étapes suivantes :
- introduction manuelle d'une action partant d'un état initial présent de la machine et au terme de laquelle la machine se trouve dans un état réel,
- libération de l'action pour l'examen logique de l'action quant à sa possibilité d'exécution,
- exécution de l'action, dans la mesure où elle est exécutable, et
- enseignement de l'état réel pouvant être obtenu par l'examen logique ou de la modification intervenue pouvant être obtenue par l'examen logique entre l'état initial et l'état réel, au moyen d'une unité d'enseignement (20) pour sa prise en compte dans le déroulement du fonctionnement à programmer de la machine en tant que nouvelle composante,
- examen logique de l'état réel pouvant être obtenu en vue de la possibilité de l'emploi en tant qu' état réel dans le déroulement du fonctionnement,
- prise en charge du paramètre de fonctionnement à partir de cet emploi pour ce positionnement dans le déroulement du fonctionnement.

2. Procédé selon la revendication 1, **caractérisé en ce que** l'action et la saisie des paramètres de fonctionnement qui y sont liés s'effectuent par un passage d'au moins un constituant ou d'au moins une unité de la machine ou d'au moins un de ses dispositifs périphériques, d'un état initial marqué de préférence pour la commande de la machine à un positionnement correspondant à l'état réel et par la confirmation du positionnement au moyen de l'unité d'enseignement (20) pour la prise en charge dans le déroulement du fonctionnement à programmer de la machine.

3. Procédé selon la revendication 1 ou 2, **caractérisé en ce que** l'action s'effectue par actionnement manuel ou par un déplacement fonctionnel au moyen d'une unité de saisie (10) ou de l'unité d'enseignement (20) de préférence par une intervention de l'utilisateur séparée de la commande de la machine (CM).

4. Procédé selon l'une des revendications précédentes, **caractérisé en ce que** les possibilités sont mises à disposition en tant que possibilités d'exécution en partant de la position confirmée, en vue des étapes suivantes et/ou précédentes du déroulement de fonctionnement.

5. Procédé selon la revendication 4, **caractérisé en ce que** les possibilités d'exécution sont examinées et mises à disposition à partir de cet état réel.

6. Procédé selon l'une des revendications précédentes, **caractérisé en ce que** les paramètres de fonctionnement sont le parcours et/ou le temps.

7. Procédé selon l'une des revendications précédentes, **caractérisé en ce que** les paramètres de fonctionnement sont saisis sur la base de la modification des axes de la machine (14) et/ou d'acteurs.

8. Procédé selon l'une des revendications précédentes, **caractérisé en ce que** la prise en charge dans le déroulement de fonctionnement à programmer s'effectue après examen du déroulement de fonctionnement au moyen de l'ensemble de données sur les règles générales de la machine (14) et du processus en cours et sur la base de l'équipement et de l'environnement de la machine en prenant en compte les déroulements partiels ayant déjà eu lieu.

9. Procédé selon l'une des revendications précédentes 3 à 8, **caractérisé en ce que** dans le cas d'un enseignement de l'action par un déplacement fonctionnel et une saisie au moyen de l'unité de saisie (10) ou au moyen de l'unité d'enseignement (20), l'examen logique de l'action s'effectue quant à sa possibilité d'exécution, une partie illogique de l'action n'étant pas autorisée.

10. Procédé selon la revendication 9, **caractérisé en ce que**, dans le cas où l'examen logique montre que l'action n'est exécutable que partiellement, un enseignement partiel est effectué et le reste de l'action est stocké provisoirement et/ou éliminé après un contact avec l'utilisateur.

11. Procédé selon l'une des revendications précédentes, **caractérisé en ce que** l'action s'effectue au moyen d'un passage en plusieurs fois du constituant ou de l'unité et/ou par le passage de plusieurs constituants ou unités à différentes positions.

12. Procédé selon l'une des revendications précédentes, **caractérisé en ce que** le déroulement est au moins un déroulement partie d'une fonction de déroulement de base de la machine.

13. Procédé selon l'une des revendications précédentes, **caractérisé en ce que** le procédé est mise en oeuvre sur une machine à injection de matière plastique fonctionnant cycliquement et **en ce que** les sections sont des sections de cycle.

14. Support lisible par un ordinateur, tel qu'un support de données, ayant des instructions exécutables par un ordinateur pour à mise en oeuvre du procédé de commande interactive d'une machine selon l'une des revendications 1 à 13.
